# EUROPÄISCHE PATENTSCHRIFT

(11) **EP 0 989 377 B1**
(45) Veröffentlichungstag und Bekanntmachung des Hinweises auf die Patenterteilung: **07.04.2004**
(21) Anmeldenummer: 99117224.8
(22) Anmeldetag: 01.09.1999
(51) Int. Cl.: F27B 17/02, A61C 13/20

(54) **Ofen für die Herstellung von Zahnersatzteilen**
Kiln for the production of dental prostheses
Four pour la fabrication de prothèses dentaires

(30) Priorität: 25.09.1998 DE 19844136
(43) Veröffentlichungstag der Anmeldung: 29.03.2000
(73) Patentinhaber: Ivoclar Vivadent AG, 9494 Schaan (LI)
(72) Erfinder: Rohner, Gottfried, 9450 Altstätten (CH); Lorünser, Johannes, 6700 Bludenz (AT); Ulbricht, Horst, 9492 Eschen (LI)
(74) Vertreter: Baronetzky, Klaus, Dipl.-Ing.

(56) Entgegenhaltungen:
- DE-C- 4 002 358

## Beschreibung

Die Erfindung betrifft einen Ofen gemäß dem Oberbegriff von Anspruch 1.

Öfen für die Herstellung von Zahnersatzteilen aus zahntechnischen Massen, insbesondere aus Zahnkeramik, sind seit langem bekannt. Über einen Tauchkolben wird Druck auf die in einer Muffel angeordnete zahntechnische Masse ausgeübt, wobei die Muffel zusammen mit mindestens dem unteren Ende des Kolbens in dem Ofen erwärmt wird. Der Ofen erwärmt die Muffel und damit die zahntechnische Masse so lange, bis die zahntechnische Masse unter Druck durch den Kolben vollständig in die in der Muffel für die Herstellung des Zahnersatzteils gebildeten Hohlräume geflossen ist.

Bereits aus der DE-PS 664 133 ist es bekannt, daß eine Bläschenbildung vermieden werden muß, wobei diese bekannte Lösung eine vergleichsweise lange Preßzeit realisiert, um die Bläschenbildung zu vermeiden.

Der Antrieb des Kolbens kann entweder durch eine entsprechende Gewichtsbelastung oder pneumatisch oder elektrisch mit entsprechenden Antriebsvorrichtungen erfolgen. Für die Bereitstellung einer möglichst geringen Zykluszeit trotz vermeidung der Bläschenbildung ist es günstig, wenn die Vortriebsgeschwindigkeit des Kolbens steuerbar ist, so daß sich pneumatische und elektrische Antriebseinrichtungen bewährt haben.

Verschiedene derartige Öfen sind bekannt. Insbesondere ist auch bereits eine elektrische Ausgestaltung eines Druckzylinders für den Antrieb des Kolbens vorgeschlagen worden, bei der für die Erfassung des Arbeitsdrucks des Kolbens die Stromaufnahme des Antriebsmotors für die dortige Antriebsspindel verwendet wird, wobei zusätzlich eine Weg-Zeit-Messung erfolgen kann.

Eine hydraulische Steuerung des am Kolben lastenden Druckes unter Verwendung eines Druckfühlers und bei zusätzlicher Messung des Kolbenweges ist beschrieben in DE-C-4 002 358. Demgegenüber liegt der Erfindung die Aufgabe zugrunde, einen Ofen gemäß dem Oberbegriff von Anspruch 1 zu schaffen, der trotz sicherer Vermeidung der Bläschenbildung ein noch besseres Ergebnis bei der Herstellung von Zahnersatzteilen zuläßt.

Diese Aufgabe wird erfindungsgemäß durch Anspruch 1 gelöst. Vorteilhafte Weiterbildungen ergeben sich aus den Unteransprüchen.

Durch die erfindungsgemäßen Maßnahmen, eine Seite des Druckfühlers von einer Gegenkraft des Kolbens beaufschlagen zu lassen, kann insbesondere die Elastizität des Kolbens, die bei einer Wegmessung außer Betracht bleibt, in die Bereitstellung der gewünschten Betriebsparameter einfließen. Überraschend läßt sich hiermit eine genauere Einhaltung der Betriebsparameter des Ofens und des Kolbens festlegen: die erfindungsgemäße Lösung erfaßt exakt die im Kolben wirkende Druckkraft, wobei es wesentlich ist, daß die gesamte Belastung des Kolbens in die Berechnung einfließt.

In einer besonders bevorzugten Ausgestaltung des erfindungsgemäßen Ofens ist ein Verformungselement, das insbesondere metallisch sein kann, zwischen dem hinteren Ende der Antriebsvorrichtung und einem ofenfesten Stützpfosten ausgebildet. Diese Ausgestaltung erlaubt eine alterungsunempfindliche Realisierung des Druckfühlers.

In einer weiteren bevorzugten Ausgestaltung ist der Druckfühler zwischen dem Ende des Kolbens, das von dem Wirkende beabstandet ist oder der dort angebrachten Antriebsvorrichtung, und einer Gegenhalteplatte angebracht. Im Verlauf zwischen Kolben und Gegenhalteplatte ist die Antriebsvorrichtung vorgesehen, die bevorzugt einen Schrittmotor aufweist. Die gesamte, von der Antriebsvorrichtung erzeugte Kraft wird damit von der Gegenhalteplatte aufgenommen und damit über den Druckfühler geleitet, die wiederum von Zugelementen gehalten ist, die auf der Bodenplatte der Muffel befestigt sind.

Es besteht dementsprechend ein geschlossener Kraftkreislauf, wobei es sich versteht, daß die Druckkraft des Kolbens auf die Anzahl der verwendeten Zugelemente aufgeteilt wird. Erfindungsgemäß besonders günstig ist es, wenn der Druckfühler koaxial angeordnet ist, so daß Winkelabweichungen ausgemittelt werden.

In einer besonders bevorzugten Ausgestaltung ist eine in sich homogene Gummiplatte als Verformungselement realisiert, die ein Sensorelement abstützt, während das andere Sensorelement an der Sensorplatte abgestützt ist.

Bei dieser Ausgestaltung läßt sich ein definierter Anteil der von der Antriebsvorrichtung erzeugten Kraft von dem Druckfühler erfassen, wobei der Anteil den Flächenanteilen des Druckfühlers an der Oberfläche des Verformungselements entspricht.

Wenn beispielsweise eine maximale Kraft von 300 N durch die Antriebsvorrichtung erzeugt werden kann, läßt sich auf diese Weise ein Präzisions-Druckfühler mit einem Meßbereich bis 30 N einsetzen, der eine Fläche von einem Zehntel der Gesamtfläche des Verformungselements einnimmt.

Besonders bevorzugt ist eine Ausführungsform, bei welcher die Antriebsvorrichtung, die den Schrittmotor aufweist, als komplette Einheit vormontiert hergestellt wird, und dann - bei Bedarf auch nachträglich - über einen Adapter an bereits bestehende Öfen zur Verbesserung der Genauigkeit eingesetzt werden kann. Die Vormontage als Einheit erlaubt es, den Anfangsdruck auf das Verformungselement so gering einzustellen, daß er beispielsweise unter der halben Genauigkeit des Sensors bleibt. Wenn die Meßgenauigkeit des Sensors beispielsweise 0,2% beträgt, und die maximal durch die Kolbenstange aufzubringende Kraft 300 N beträgt, kann die Anfangs-Haltekraft, die auf das Verformungselement wirkt, beispielsweise so eingestellt werden, daß sie 3 N nicht übersteigt. Auf diese Weise ist zum einen eine sicher abgestützte Lagerung gewährleistet und zum anderen sichergestellt, daß keine meßbare Verfälschung des Anzeigeergebnisses durch den Einbau der Antriebseinrichtung erzeugt wird.

Obwohl grundsätzlich auch ein geregelter Gleichstrommotor für die Bereitstellung der Antriebskraft realisierbar ist, ist es bevorzugt, einen Schrittmotor einzusetzen. Dieser trägt bevorzugt eine Gewindespindel, die einstückig mit seiner Achse ausgebildet sein kann und auf welcher eine Gewindehülse läuft. Die Gewindehülse dient der Umsetzung der Drehbewegung in eine Linearbewegung, entsprechend der Gewindesteigung. Es versteht sich, daß eine Drehsicherung angebracht ist, die ein Mitdrehen der Gewindehülse verhindert. Eine derartige Verdrehsicherung kann beispielsweise als spielarm an einem Zugelement geführter und beidseitig in Verdrehrichtung wirkender Anschlag ausgebildet sein. Wenn ein derartiger Anschlag realisiert ist, kann er in einer modifizierten Ausgestaltung auch als Basis für die Bereitstellung eines Wegmessers herangezogen werden. Hierfür kann der Anschlag entweder mit einem Potentiometerschieber gekoppelt sein, oder über eine optische Codierung wirken, die die genaue Position des Kolbens bereits binär aufbereitet liefert.

Überraschend erlaubt die erfindungsgemäß koaxial angeordnete Antriebsvorrichtung eine wesentlich verbesserte Genauigkeit, insbesondere im Vergleich zu einer pneumatischen Antriebseinrichtung oder einer Antriebseinrichtung mit einem Motor, der auf die dort gezahnte Kolbenstange wirkt. Durch die axiale Kraftausübung werden Winkelfehler und damit verbundene Reibungsverluste ausgeschaltet bzw. auf Größenordnungen reduziert, die keine Rolle mehr spielen.

Besonders günstig ist es, daß beim vollständigen Einpressen der Masse kein Luftpolster besteht, so daß das Antriebssystem einen sehr geringen Elastizitätswert aufweist. Bei Verwendung eines Schrittmotors als Antriebsvorrichtung erzeugt jeder einzelne Schritt des Motors eine substantielle Zunahme der Antriebskraft. Die Weg/Kraft-Kennlinie des erfindungsgemäßen Ofens wird in vorteilhafter Weise nahezu schlagartig ziemlich steil, so daß eine augenblickliche Erfassung des Pressendes realisierbar ist.

In diesem Zusammenhang ist es besonders günstig, daß erfindungsgemäß das Brennende an einen exakten Zeitpunkt, der durch das Ende des Pressvorgangs vorgebbar ist, geknüpft werden kann: Nach Ablauf einer programmierbaren, vorteilhaft jedoch fest eingestellten Nachpresszeit läßt sich in einer vorteilhaften Ausgestaltung der mit einem elektrisch angetriebenen Schwenkmechanismus ausgerüstete Ofenkopf wegschwenken, so daß die Muffel automatisch und schnell abkühlt, indem die Brennkammer automatisch geöffnet wird.

Diese Ausgestaltung des Ofens ist besonders günstig bei dem Brennen von Lithiumdisilikat-Glaskeramiken, bei denen im heißen Zustand der Einbettmasse eine starke Reaktion mit dieser stattfindet. Die Intensität der Reaktion ist unmittelbar abhängig von der Einwirkzeit und wird dementsprechend wesentlich reduziert, wenn das Ende des Füllvorgangs erkannt und dann automatisch für eine Abkühlung gesorgt wird.

Dies stellt einen besonderen Fortschritt gegenüber den bisherigen Lösungen dar, bei denen eine Zeitsteuerung vorgesehen war, so daß das Pressende nicht unter drei Minuten erkannt wurde. Die erfindungsgemäße Lösung erlaubt es daher, die Prozeßzeit um bis zu drei Minuten zu reduzieren.

Gemäß einem weiteren, besonders günstigen Aspekt der Erfindung kann mit der erfindungsgemäßen Lösung ein nachträgliches Ätzen mit Säure wie HF entfallen, so daß der diesbezügliche Zeitaufwand entbehrlich ist und eine größere Paßgenauigkeit der zahntechnischen Arbeit erzielt werden kann.

Erfindungsgemäß besonders vorteilhaft ist ferner die einfache Anpassung der Vorschubbewegung des Kolbens sowohl nach der Geschwindigkeit als auch nach der Kraft, so daß eine Optimierung in Anpassung an die anstehende Press-/Brennaufgabe vorgenommen werden kann. In einer bevorzugten Ausgestaltung wird zunächst mit einer konstanten Kraft von beispielsweise 250 N gearbeitet und ein Konstanthalten der Geschwindigkeit führt zu einer Erhöhung der Kraft, wobei das Erreichen der maximal vorgegebenen Antriebskraft mit dem Pressende zusammenfällt.

Mit der programmierbaren Anpassung kann dem unterschiedlichen Viskositätsverhalten, aber auch dem unterschiedlichen Reaktionsverhalten mit der Einbettmasse, der je verwendeten Glaskeramiken Rechnung getragen werden. Hier läßt sich auch mittels einer freien Programmierbarkeit der Möglichkeit Rechnung tragen, daß mit dem erfindungsgemäßen Ofen auch bislang noch nicht bekannte Materialien gepresst und hinsichtlich des Pressvorgangs optimiert werden können.

Besonders günstig ist es auch, daß die in einer bevorzugten Ausgestaltung vorgesehene Realisierung der Antriebsvorrichtung mit einem Schrittmotor in Kombination mit dem erfindungsgemäßen Drucksensor die Möglichkeit ergibt, die Überlastung des Schrittmotors und damit den Verlust von Schritten zu verhindern. Der Drucksensor stellt die Schrittmotorsteuerung so ein, daß keine Überlastung stattfinden kann, so daß der Pressweg stets der Vorgabe entspricht, und der Schrittmotor im sicheren Bereich arbeitet, ohne daß eine zusätzliche Wegerfassung erforderlich wäre.

Erfindungsgemäß besonders günstig ist es, daß der neue Ofen es erlaubt, die Verweilzeit der Preßkeramik in der Einbettmasse stark zu verkürzen. Das Abschaltkriterium läßt sich sehr genau festlegen und ist auch gültig, wenn Keramiken mit feinen Kanälen verwendet werden, die einen entsprechend höheren Fließwiderstand mit sich bringen. Durch die Verkürzung der Verweilzeit läßt sich die Reaktion zwischen Preßkeramik und Einbettmasse stark vermindern oder verhindern, so daß auch neue, hochwertige Materialien für die Preßkeramik zum Einsatz gelangen können, die vergleichsweise reaktiv sind.

Aufgrund des langsamen Kraftaufbaus beim Preßbeginn können auch filigrane Brückenteile zuverlässig erstellt werden.

Ein weiterer Vorteil des erfindungsgemäß verbesserten Abschaltkriteriums ist die Verkürzung des Preßvorgangs, so daß die Produktivität des erfindungsgemäßen Ofens gegenüber dem Stand der Technik verbessert ist. Zudem ist auch noch die Paßgenauigkeit verbessert, wenn auf ein Ätzen der Zahnersatzteile verzichtet werden kann, und die Oberfläche des Zahnrestaurationsteils ist glatter und schöner.

weitere Vorteile, Einzelheiten und Merkmale ergeben sich aus der nachfolgenden Beschreibung zweier Ausführungsbeispiele anhand der Zeichnungen.

Es zeigen:
- Fig. 1: eine Ansicht eines Teils eines erfindungsgemäßen Ofens, in teilweise aufgebrochener Darstellung der Antriebsvorrichtung und des Druckfühlers;
- Fig. 2: eine Unteransicht aus Sicht der Pfeile II-II aus Fig. 1, zur Darstellung der Einheit, die die Antriebsvorrichtung und den Druckfühler aufnimmt; und
- Fig. 3: eine vergrößerte Darstellung des Druckfühlers aus der Ausführungsform gemäß Fig. 1; und
- Fig. 4: eine Darstellung einer weiteren Ausführungsform eines Teils eines erfindungsgemäßen Ofens.

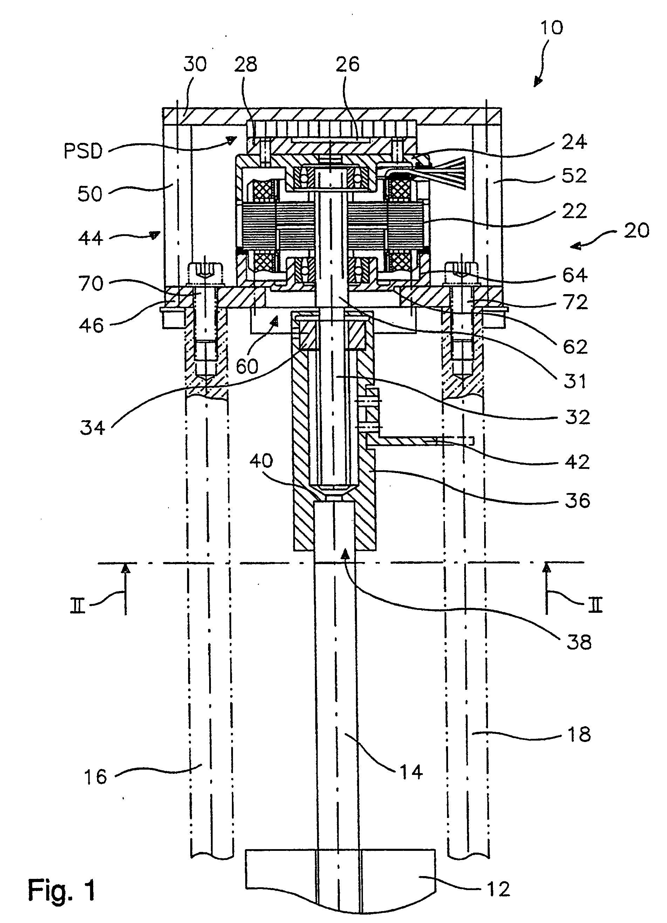

Das in Fig. 1 dargestellt Ausführungsbeispiel eines erfindungsgemäßen Ofens 10 weist eine Muffel 12 auf, die in an sich bekannter Weise von einer Haube abgedeckt ist.

Durch die Haube hindurch erstreckt sich ein Kolben 14 und in dem dargestellten Ausführungsbeispiel auch Zugelemente 16 und 18, wobei es gemäß einer modifizierten Ausgestaltung vorgesehen ist, daß die Zugelemente 16 und 18 außerhalb der Ofenhaube zu einer nicht dargestellten Bodenplatte verlaufen, auf welcher die Muffel mit der zahntechnischen Masse abgestellt ist.

Die Ofenhaube läßt sich in an sich bekannter Weise beheizen, und durch das Schmelzen der zahntechnischen Masse kann der Kolben 14 nach unten bewegt werden, damit die zahntechnische Masse in die in der Muffel ausgebildeten Hohlräume zur Bildung von Zahnersatzteilen eindringen kann.

Der Kolben 14 ist axial an eine Antriebsvorrichtung 20 angeschlossen, die einen Schrittmotor 22 aufweist. Der Schrittmotor 22 ist an seiner von dem Kolben 14 abgewandten Seite auf einer Sensorplatte 24 abgestützt, die einen Druckfühler 26 trägt. Der Druckfühler 26 liegt zusammen mit der Sensorplatte 24 an einem Verformungselement 28 an, das bevorzugt als Gummioder Siliconplatte ausgebildet ist. Das Verformungselement 28 ist nach oben hin über seine gesamte Erstreckung an einer Gegenhalteplatte 30 abgestützt, die zugfest mit den Zugelementen 16 und 18 verbunden ist.

Der Schrittmotor 22 weist eine Welle 31 auf, die einstückig mit einer Antriebsspindel 32 ausgebildet ist. Auf der Antriebsspindel 32 läuft eine Mutter 34, die drehfest mit einer Hülse 36 verbunden ist. Die Hülse 36 bildet damit eine Gewindehülse, wobei es gemäß einer anderen Ausgestaltung vorgesehen ist, kurzerhand endseitig einer Hülse ein entsprechendes Innengewinde einzudrehen und die Hülse im weiteren Verlauf nach der Art eines Sacklochs auszudrehen.

Beiden Ausführungsformen ist gemein, daß unabhängig von der Stellung der Hülse 36 relativ zur Antriebsspindel 34 der Eingriffsbereich, also die axiale Länge, über welche der Gewindeeingriff zwischen Antriebsspindel und Hülse besteht, gleich ist. Dementsprechend ist die Antriebs-Reibungskraft auch gleich, so daß der Schrittmotor im wesentlichen mit den gleichen Antriebsströmen betätigt werden kann und damit keine zusätzliche Nichtlinearität eingeführt wird.

Die Hülse 36 nimmt in ihrer Aufnahmeöffnung 38 den Kolben 14 endseitig auf. Die Aufnahme erfolgt in spielfreier Passung, wobei gegebenenfalls zur Erleichterung des Einführens eine in Fig. 1 nicht dargestellte Einführschräge vorgesehen sein kann. Es ist besonders bevorzugt, daß die Stirnseite 40 des Kolbens 14, die seinem Wirkende gegenüberliegt, großflächig abgestützt wird, um Verformungen der Hülse 36 und des Kolbens 14 zu vermeiden.

Der Kolben 14 besteht bevorzugt aus keramischem Material, während die Hülse 36 beispielsweise aus rostfreiem Stahl bestehen kann.

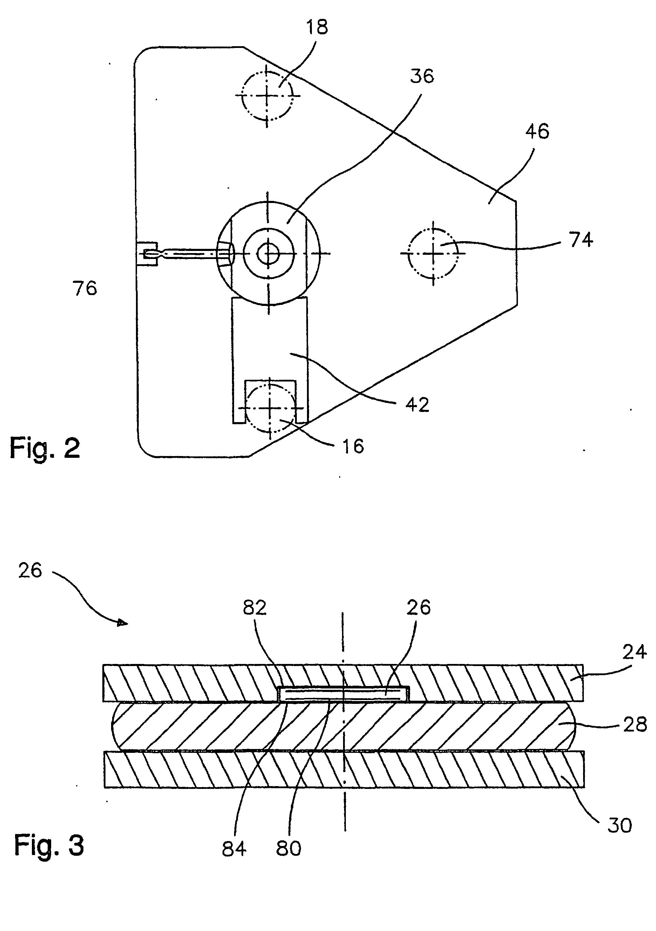

Um eine Drehmitnahme der Hülse 36 beim Einschalten des Schrittmotors 22 zu verhindern, ist ein Drehanschlag 42 vorgesehen, der - wie es besser aus Fig. 2 ersichtlich ist - das Zugelement 18 im wesentlichen U-förmig umgreift und damit ein Verdrehen der Hülse 36 verhindert. Das Zugelement 18 besteht bevorzugt ebenfalls aus poliertem Stahl, und der Drehanschlag 42 kann an ihm im wesentlichen spielfrei und mit vernachlässigbarer Reibung gleiten, wobei der Drehanschlag 42 sicher auf der Hülse 36 befestigt ist.

Die Antriebsvorrichtung 20 ist zusammen mit einer Drucksensoreneinheit PSD, die den Druckfühler 26 aufweist, in einer vormontierbaren Einheit 44 aufgenommen. Die Einheit 44 erstreckt sich von der Gegenhalteplatte 30 bis zu einer Stützplatte 46, wobei die beiden Platten 30 und 46 über Stützstäbe, von denen zwei Stützstäbe 50 und 52 aus Fig. 1 ersichtlich sind, aneinander gelagert sind.

Bevorzugt sind die Stützstäbe 50 und 52 als konterbare Gewindestäbe ausgebildet, so daß der Abstand zwischen der Gegenhalteplatte 30 und der Stützplatte 46 einstellbar ist.

Die Stützplatte 46 weist eine zentrale Ausnehmung 60 auf, in der ein Vorsprung 62 des Schrittmotors 22 aufgenommen ist. Ein Flansch 64 des Schrittmotors ist den Vorsprung 62 umgebend an der Stützplatte 46 abgestützt, so daß bei Kraftbeaufschlagung durch die Gegenkraft des Kolbens 14 der Schrittmotor 22 von der Stützplatte 46 leicht weggedrückt wird, aber dennoch in der Ausnehmung 60 sicher geführt ist, während das Verformungselement 28 komprimiert wird.

Wie aus Fig. 1 ersichtlich ist, ist die Einheit 44 mit Schraubbolzen 70, 72 auf den als Zugstangen ausgebildeten Zugelementen 16 und 18 befestigt. Diese Anordnung zusammen mit der auf den Kolben 14 aufsteckbaren Ausgestaltung der Hülse 36 erlaubt auch die nachträgliche Anbringung der erfindungsgemäßen Antriebseinheit 44, die dementsprechend fertig montiert und justiert vorbereitet werden kann, bevor sie zum Einsatz gelangt. Bevorzugt ist der Abstand zwischen Stützplatte 46 und Gegenhalteplatte 30 so eingestellt, daß der Schrittmotor 22 leicht auf das Verformungselement 28 drückt, ohne dieses jedoch nennenswert zu komprimieren. Diese Lage entspricht dementsprechend der Nullbelastung des Druckfühlers, der elektrisch mit einer nicht dargestellten Steuereinrichtung für den Schrittmotor und den Ofen verbunden ist.

Aus Fig. 2 ist ersichtlich, daß anstelle der aus Fig. 1 ersichtlichen beiden Zugelemente 16 und 18 insgesamt 3 im Dreieck verteilte Zugelemente 16, 18 und 74 realisiert sind. Gleiche Bezugszeichen weisen hier wie auch in den weiteren Figuren auf gleiche Teile hin und bedürfen dementsprechend keiner näheren Erläuterung. Die Stützplatte 46 ist in dem dargestellten Ausführungsbeispiel im wesentlichen dreieckig ausgebildet, wobei es sich versteht, daß beliebige andere Führungen eingesetzt werden können, ohne den Bereich der Erfindung zu verlassen.

Fig. 2 zeigt darüber hinaus die Anordnung eines Wegfühlers 76, der entweder nach Potentiometerart oder optisch codiert arbeitet und an der Hülse 36 befestigt ist.

Fig. 3 zeigt den Aufbau des Druckfühlers 26. Die Gegenhalteplatte 30 wird über das Verformungselement 28 auf Abstand von der Sensorplatte 24 gehalten. Die Sensorplatte 24 weist eine zentrale Ausnehmung 80 auf, deren Fläche etwa ein Zehntel der Fläche der Sensorplatte 24 beträgt und die in ihren Abmessungen für die Aufnahme des eigentlichen Druckfühlers 26 bestimmt ist. Der Druckfühler weist zwei voneinander beabstandete Platten als Sensorelemente 82, 84 auf, deren Abstandsänderung er in an sich bekannter Weise in ein elektrisches Signal umsetzt. Ein Beispiel für einen derartigen Druckfühler 26 ist ein Piezoelement oder ein kapazitiver Druckfühler.

Beim Zusammendrücken der Sensorplatte 24 und der Gegenhalteplatte 30 wird das Verformungselement 28 komprimiert. Aufgrund der elastischen Eigenschaften des Verformungselements 28 übt es im wesentlichen gleichmäßig verteilt über seine Oberfläche Druck aus, so auch auf den Druckfühler 26.

Nachdem die weitaus größere Fläche des Verformungselements 28 an der Sensorplatte 24, aber nicht an dem Druckfühler 26 anliegt, erfolgt die Abstützung des dementsprechend weit größeren Teils der aufgebrachten Kraft direkt zwischen Sensorplatte 24 und Verformungselement 28. Ein proportional entsprechend den Flächen kleinerer Anteil wird von dem Druckfühler 26 aufgenommen, so daß er bei steigendem Druck ein entsprechend größeres Ausgangssignal widergibt.

Es versteht sich, daß die aus Sensorplatte 24, Gegenhalteplatte 30, Verformungselement 28 und Druckfühler 26 bestehende Einheit in sich bereits kalibrierbar ist. Hierzu kann kurzerhand eine zunehmende und bekannte Kraft aufgebracht und das - meist etwas nichtlineare - Ausgangssignal des Piezoelements dagegen aufgetragen bzw. abgespeichert werden, so daß die entsprechenden Meßwerte bereits unmittelbar in die Ansteuerelektronik für den Schrittmotor eingegeben werden können.

Es versteht sich, daß anstelle des Piezoelements auch ein beliebiger anderer geeigneter Kraftaufnehmer, beispielsweise ein Dehnungsmeßstreifen, eingesetzt werden kann, wobei auch für einen Dehnungsmeßstreifen gilt, daß die systemimmanente Nichtlinearität bereits durch entsprechende Vorabspeicherung und Kalibrierung kompensiert werden kann.

Während die erfindungsgemäße ofenfeste Lagerung des Sensorelements 84 bevorzugt dadurch sichergestellt werden kann, daß das Sensorelement 84 sich an der Gegenhalteplatte 30 abstützt, die zugfest über die Zugelemente mit der Abstellfläche für die Muffel verbunden ist, versteht es sich, daß auch eine indirekt ofenfeste Lagerung möglich ist, bei welcher die Zugelemente mit der verschwenkbaren Ofenhaube verbunden sind, die beim Brennen einen definierten Zustand bezogen auf die Muffel einnimmt.

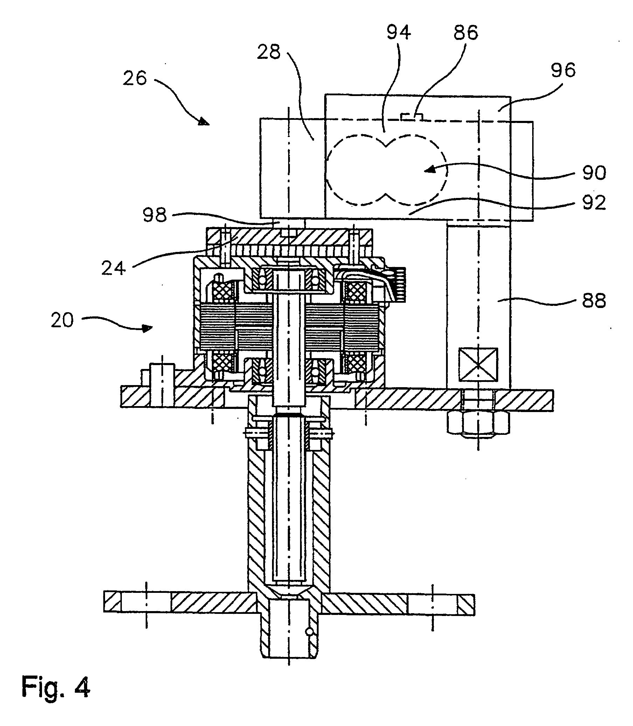

Die Ausführung gemäß Fig. 4 zeigt eine modifizierte Ausgestaltung eines erfindungsgemäßen Ofens, die besonders bevorzugt ist. Bei dieser Ausführungsform weist der Druckfühler 26 ein Verformungselement 28 auf, das als Biegebalken ausgebildet ist und auf seiner Oberfläche einen Dehnungsmeßstreifen 86 aufnimmt. Der Biegebalken 28 ist auf einem Stützpfosten 88 fest gelagert, der seinerseits ofenfest verankert ist.

Der Biegebalken besteht in dem dargestellten Ausführungsbeispiel aus Aluminium und weist eine zentrale Ausnehmung 90 auf, die einen Zugschenkel 92 und einen Druckschenkel 94 voneinander trennt. Die Ausnehmung 90 und die entsprechenden Schenkel 92 und 94 sind in Fig. 4 gestrichelt dargestellt, nachdem eine Abdeckhaube 96 diesen empfindlichen Bereich einschließlich des Dehnungsmeßstreifens 86 abdeckt.

Die Antriebsvorrichtung 20 ist an dem dem Zugschenkel 92 benachbarten und von dem Stützpfosten 88 beabstandeten Ende des Verformungselements 28 an diesem abgestützt. Zur Zentrierung ist ein Dorn 98 an dem Verformungselement 28 ausgebildet, der an der bei diesem Ausführungsbeispiel als Druckplatte ausgebildeten Sensorplatte 24 abgestützt ist.

Trotz der einseitigen Abstützung erlaubt diese dargestellte Ausführungsform eine besonders präzise und auch alterungsunabhängige Erfassung der Vortriebskraft, so daß sie sich besonders gut auch für niedrig viskose Preßkeramiken mit kurzer Verweilzeit der Preßkeramik in der Einbettmasse eignet.

## Patentansprüche

1. Ofen für die Herstellung von Zahnersatzteilen in einer Muffel, mit einem von einer Antriebsvorrichtung angetriebenen Kolben, der zur Ausübung von Druck auf eine zahntechnische Masse in die Muffel einführbar ist, mit einem Druckfühler für die Erfassung des Drucks, den der Kolben ausübt, **dadurch gekennzeichnet, daß** der Druckfühler (26) ein Verformungselement (28) aufweist, das an einer Seite, insbesondere am bezogen auf die Muffel (12) rückwärtigen Ende des Kolbens (14), von einer Gegenkraft des Kolbens (14) beaufschlagbar ist und an der anderen Seite ofenfest gelagert ist.

2. Ofen nach Anspruch 1, **dadurch gekennzeichnet, daß** der Druckfühler (26) den auf den Kolben (14) ausgeübten Druck erfaßt.

3. Ofen nach einem der vorhergehenden Ansprüche, **dadurch gekennzeichnet, daß** der Druckfühler (26) zwischen dem rückwärtigen Ende des Kolbens (14) und dem Ofen (10) gelagert ist.

4. Ofen nach einem der vorhergehenden Ansprüche, **dadurch gekennzeichnet, daß** das Verformungselement (28) mindestens an zwei Seiten, insbesondere ringförmig, den Druckfühler (26) umgibt.

5. Ofen nach einem der vorhergehenden Ansprüche, **dadurch gekennzeichnet, daß** ein Schrittmotor (22) für den Vortrieb des Kolbens (14) eingesetzt ist und der Druckfühler (26) ein Signal für die Steuerung des Schrittmotors (22) abgibt.

6. Ofen nach einem der vorhergehenden Ansprüche, **dadurch gekennzeichnet, daß** eine Antriebsvorrichtung (20) für den Kolben (14), insbesondere ein Schrittmotor (22), eine vorgegebene maximale Antriebskraft, insbesondere ein maximales Drehmoment aufweist, deren Größe auf einen Wert unterhalb der maximalen Verformungskraft der zahntechnischen Masse begrenzt ist, und daß beim Erreichen der maximalen Antriebskraft ein Warnsignal abgebbar ist.

7. Ofen nach einem der vorhergehenden Ansprüche, **dadurch gekennzeichnet, daß** ein Schrittmotor (22) der Antriebsvorrichtung (20) mit einem Regelkreis angesteuert ist, mit welchem Antriebssignale abgebbar sind, wenn der Druckfühler (26) eine Antriebskraft erfaßt, die deutlich unterhalb einer Nenn-Antriebskraft des Schrittmotors (26) ist.

8. Ofen nach einem der Ansprüche 1 bis 6, **dadurch gekennzeichnet, daß** die Antriebsvorrichtung (20) beim Erreichen der maximalen Antriebskraft abschaltbar ist.

9. Ofen nach einem der vorhergehenden Ansprüche, **dadurch gekennzeichnet, daß** der Druckfühler (26) einen Ausgangsanschluß aufweist, der an eine Regelvorrichtung für die Kolbenantriebsvorrichtung (20) angeschlossen ist, mit welcher die Kolbengeschwindigkeit in Abhängigkeit von Weg und/oder Druck regelbar ist.

10. Ofen nach einem der vorhergehenden Ansprüche, **dadurch gekennzeichnet, daß** das Verformungselement (28) von dem Erwärmungsbereich des Ofens (10) thermisch getrennt ist und daß insbesondere eine gesinterte, schlecht wärmeleitende Keramikplatte zwischen dem Verformungselement (28) und dem Kolben (14) angeordnet ist.

11. Ofen nach einem der vorhergehenden Ansprüche, **dadurch gekennzeichnet, daß** der Kolben (14) einen Keramikstab aufweist, der in die Muffel (12) eintaucht.

12. Ofen nach einem der vorhergehenden Ansprüche, **dadurch gekennzeichnet, daß** ein Antriebsmotor für den Kolben (14), insbesondere ein Schrittmotor (22), mit einer Gewindespindel drehfest verbunden oder einstückig mit dieser ist, die in eine dem Kolben (14) zugeordnete Hülse (36) eintaucht, die mindestens über einen Teil ihrer Länge mit einem Innengewinde, insbesondere mit einer eingesetzten Mutter (34) mit Innengewinde, versehen ist.

13. Ofen nach einem der vorhergehenden Ansprüche, **dadurch gekennzeichnet, daß** eine Antriebsvorrichtung (20) für den Kolben (14) als kompakte und axial angeordnete Einheit (44) an dessen der Muffel (12) abgewandtem Ende montiert ist, die über Zugelemente (16, 18, 74), insbesondere Zugstangen, mit einer Bodenplatte, die für das Aufsetzen der Muffel (12) bestimmt ist, verbunden ist.

14. Ofen nach einem der vorhergehenden Ansprüche, **dadurch gekennzeichnet, daß** der Antriebsmotor für den Kolben (14) an eine Steuervorrichtung angeschlossen ist, die ein Eingangssignal von dem Druckfühler (26) empfängt und den Antriebsmotor unter Änderung des durch den Druckfühler (26) erfaßten Drucks steuert.

15. Ofen nach einem der vorhergehenden Ansprüche, **dadurch gekennzeichnet, daß** der Antriebsmotor für den Kolben (14) an eine Steuervorrichtung angeschlossen ist, die ein Eingangssignal von dem Druckfühler (26) empfängt und den Antriebsmotor unter Änderung der Preßgeschwindigkeit steuert.

16. Ofen nach einem der vorhergehenden Ansprüche, **dadurch gekennzeichnet, daß** eine Steuervorrichtung für eine Antriebsvorrichtung (20) für den Kolben (14) für die Bereitstellung der Druckkraft an dem Wirkende des Kolbens (14) die Elastizität des Kolbens (14) berücksichtigt.

17. Ofen nach einem der vorhergehenden Ansprüche, **dadurch gekennzeichnet, daß** zusätzlich zu dem Druckfühler ein Wegfühler (76) an dem Kolben (14) angeordnet ist, der insbesondere bei Verwendung eines Schrittmotors (22) für die Antriebsvorrichtung des Kolbens (14) durch die rechnerische Erfassung der Vortriebssignale für den Schrittmotor (22) realisiert ist.

18. Ofen nach einem der vorhergehenden Ansprüche, **dadurch gekennzeichnet, daß** die eine Seite des Verformungselements (28) an dem Kolben (14) oder der Antriebsvorrichtung (20) für den Kolben (14) anliegt oder durch einen Teil des Kolbens (14) gebildet ist.

19. Ofen nach einem der vorhergehenden Ansprüche, **dadurch gekennzeichnet, daß** der Druckfühler (26) an einem Schenkel eines L ausgebildet ist, der das Verformungselement (28) bildet, wobei die Antriebsvorrichtung (20) sich an der Spitze des Schenkels abstützt.

20. Ofen nach einem der vorhergehenden Ansprüche, **dadurch gekennzeichnet, daß** für die Lagerung des Druckfühlers (26) ein Stützpfosten (88) ofenfest abgestützt ist, an dem das Verformungselement (28) befestigt ist.

21. Ofen nach einem der vorhergehenden Ansprüche, **dadurch gekennzeichnet, daß** das Verformungselement (28) als Biegebalken ausgebildet ist und auf einer Oberfläche einen Dehnungsmeßstreifen (86) aufweist.

22. Ofen nach Anspruch 21, **dadurch gekennzeichnet, daß** der Biegebalken eine Ausnehmung (90) aufweist, die sich insbesondere über etwa die Hälfte der Länge des Biegebalkens und über etwa zwei Drittel der Breite des Biegebalkens erstreckt.

23. Ofen nach einem der vorhergehenden Ansprüche, **dadurch gekennzeichnet, daß** das Verformungselement (28) metallisch ist und insbesondere aus Aluminium oder einer Aluminiumlegierung besteht.

## Claims

1. A kiln for the production of dental replacement parts in a muffle, having a piston which is driven by a drive device and which can be introduced into the muffle so as to exert pressure on a dental compound, having a pressure sensor for detecting the pressure exerted by the piston, **characterised in that** the pressure sensor (26) has a deforming element (28) which on one side, in particular at the rear the end of the piston (14) in relation to the muffle (12), can be acted upon by a counterforce of the piston (14), and is mounted stationary on the other side.

2. A kiln according to Claim 1, **characterised in that** the pressure sensor (26) detects the pressure exerted on the piston (14).

3. A kiln according to any one of the preceding claims, **characterised in that** the pressure sensor (26) is mounted between the rear end of the piston (14) and the kiln (10).

4. A kiln according to any one of the preceding claims, **characterised in that** the deforming element (28) surrounds the pressure sensor (26) at least on two sides, in particular annularly.

5. A kiln according to any one of the preceding claims, **characterised in that** a stepping motor (22) is used for propelling the piston (14) and the pressure sensor (26) emits a signal for controlling the stepping motor (22).

6. A kiln according to any one of the preceding claims, **characterised in that** a drive device (20) for the piston (14), in particular a stepping motor (22), has a predetermined maximum drive force, in particular a maximum torque, the magnitude of which is limited to a value below the maximum deforming force of the dental compound, and **in that** an alarm signal can be emitted upon attaining the maximum drive force.

7. A kiln according to any one of the preceding claims, **characterised in that** a stepping motor (22) of the drive device (20) is energised by a control circuit with which drive signals can be emitted when the pressure sensor (26) detects a drive force which is clearly below a nominal drive force of the stepping motor (26) [sic].

8. A kiln according to any one of Claims 1 to 6, **characterised in that** the drive device (20) can be switched off upon attaining the maximum drive force.

9. A kiln according to any one of the preceding claims, **characterised in that** the pressure sensor (26) has an output connection which is connected to a control means for the piston-drive device (20), by which the piston speed can be controlled as a function of travel and/or pressure.

10. A kiln according to any one of the preceding claims, **characterised in that** the deforming element (28) is separated thermally from the heating area of the kiln (10), and **in that** in particular a sintered, poorly heat-conducting ceramic plate is disposed between the deforming element (28) and the piston (14).

11. A kiln according to any one of the preceding claims, **characterised in that** the piston (14) has a ceramic rod which penetrates into the muffle (12).

12. A kiln according to any one of the preceding claims, **characterised in that** a drive motor for the piston (14), in particular a stepping motor (22), is connected in a manner precluding relative rotation to a threaded spindle or is in one piece therewith, which penetrates into a sleeve (36) which is associated with the piston (14) and which is provided at least over part of its length with an internal thread, in particular with an inserted nut (34) with an internal thread.

13. A kiln according to any one of the preceding claims, **characterised in that** a drive device (20) for the piston (14) is installed as a compact and axially arranged unit (44) at its end remote from the muffle (12), which unit is connected via tension elements (16,18,74), in particular tension rods, to a base plate which is intended for the mounting of the muffle (12).

14. A kiln according to any one of the preceding claims, **characterised in that** the drive motor for the piston (14) is connected to a control device which receives an input signal from the pressure sensor (26) and which controls the drive motor upon variation in the pressure detected by the pressure sensor (26).

15. A kiln according to any one of the preceding claims, **characterised in that** the drive motor for the piston (14) is connected to a control device which receives an input signal from the pressure sensor (26) and which controls the drive motor upon variation in the pressing rate.

16. A kiln according to any one of the preceding claims, **characterised in that** a control device for a drive device (20) for the piston (14), for the provision of the compressive force at the operative end of the piston (14), takes into account the elasticity of the piston (14).

17. A kiln according to any one of the preceding claims, **characterised in that**, in addition to the pressure sensor, a travel sensor (76) is provided on the piston (14), which especially when a stepping motor (22) is used for the drive device of the piston (14) is implemented by the computerised detection of the propelling signals for the stepping motor (22).

18. A kiln according to any one of the preceding claims, **characterised in that** one side of the deforming element (28) abuts against the piston (14) or the drive device (20) for the piston (14), or is formed by a part of the piston (14).

19. A kiln according to any one of the preceding claims, **characterised in that** the pressure sensor (26) is formed on one arm of an L which forms the deforming element (28), the drive device (20) bearing on the tip of the arm.

20. A kiln according to any one of the preceding claims, **characterised in that** for mounting the pressure sensor (26) a support post (88) is supported fixed to the kiln, the deforming element (28) being fastened to the support post.

21. A kiln according to any one of the preceding claims, **characterised in that** the deforming element (28) is in the form of a cantilever beam and on one surface has a strain gauge (86).

22. A kiln according to Claim 21, **characterised in that** the cantilever beam has a recess (90) which extends in particular over approximately half the length of the cantilever beam and over approximately two thirds of the width of the cantilever beam.

23. A kiln according to any one of the preceding claims, **characterised in that** the deforming element (28) is metallic and, in particular, consists of aluminium or an aluminium alloy.

## Revendications

1. Four pour la fabrication de prothèses dentaires dans un moufle, avec un piston entraîné par un dispositif d'entraînement, qui peut être introduit dans le moufle pour exercer une pression sur une masse utilisée en dentaire, et avec un capteur de pression pour la détection de la pression exercée par le piston, **caractérisé en ce que** le capteur de pression (26) comprend un élément déformable (28) qui peut être soumis sur un côté, en particulier sur l'extrémité du piston (14) qui est située à l'arrière par rapport au moufle (12), à une force opposée du piston (14) et qui est logé solidairement avec le four sur l'autre côté.

2. Four selon la revendication 1, **caractérisé en ce que** le capteur de pression (26) détecte la pression exercée sur le piston (14).

3. Four selon l'une quelconque des revendications précédentes, **caractérisé en ce que** le capteur de pression (26) est logé entre l'extrémité arrière du piston (14) et le four (10).

4. Four selon l'une quelconque des revendications précédentes, **caractérisé en ce que** l'élément déformable (28) entoure le capteur de pression (26) au moins sur deux côtés, en particulier en forme d'anneau.

5. Four selon l'une quelconque des revendications précédentes, **caractérisé en ce qu'**un moteur pas à pas (22) est utilisé pour assurer la poussée d'avancement du piston (14) et **en ce que** le capteur de pression (26) émet un signal pour la commande du moteur pas à pas (22).

6. Four selon l'une quelconque des revendications précédentes, **caractérisé en ce qu'**un dispositif d'entraînement (20) pour le piston (14), en particulier un moteur pas à pas (22), produit une force d'entraînement maximale prédéterminée, en particulier un couple maximal, dont l'ampleur est limitée à une valeur inférieure à la force de déformation maximale de la masse utilisée en dentaire, et **en ce qu'**un signal d'avertissement peut être émis lorsque la force maximale d'entraînement est atteinte.

7. Four selon l'une quelconque des revendications précédentes, **caractérisé en ce qu'**un moteur pas à pas (22) du dispositif d'entraînement (20) est activé à l'aide d'un circuit de régulation, avec lequel des signaux d'entraînement peuvent être émis lorsque le capteur de pression (26) détecte une force d'entraînement qui est nettement inférieure à une force d'entraînement nominale du moteur pas à pas (22).

8. Four selon l'une quelconque des revendications 1 à 6, **caractérisé en ce que** le dispositif d'entraînement (20) peut être arrêté lorsque la force d'entraînement maximale est atteinte.

9. Four selon l'une quelconque des revendications précédentes, **caractérisé en ce que** le capteur de pression (26) comprend un point de raccordement de sortie qui est branché sur un dispositif de régulation pour le dispositif d'entraînement (20) du piston, avec lequel la vitesse du piston peut être réglée en fonction du trajet et/ou de la pression.

10. Four selon l'une quelconque des revendications précédentes, **caractérisé en ce que** l'élément déformable (28) fait l'objet d'une séparation thermique par rapport à la zone de chauffage du four (10) et **en ce qu'**en particulier une plaque en céramique frittée et ayant une mauvaise conductibilité thermique est disposée entre l'élément déformable (28) et le piston (14).

11. Four selon l'une quelconque des revendications précédentes, **caractérisé en ce que** le piston (14) comprend une barre en céramique qui pénètre dans le moufle (12).

12. Four selon l'une quelconque des revendications précédentes, **caractérisé en ce qu'**un moteur d'entraînement pour le piston (14), en particulier un moteur pas à pas (22), est relié en solidairement en rotation, ou est constitué d'une seule pièce, avec une broche filetée qui pénètre dans une douille (36) associée au piston (14), et qui est munie sur au moins une partie de sa longueur d'un taraudage interne, en particulier d'un écrou intégré (34) muni d'un taraudage.

13. Four selon l'une quelconque des revendications précédentes, **caractérisé en ce qu'**un dispositif d'entraînement (20) pour le piston (14) est monté en tant qu'unité compacte et disposée dans le sens axial (44) sur l'extrémité opposée au moufle (12) du piston, ce dispositif étant relié à l'aide d'éléments de traction (16, 18, 74), en particulier de barres de traction, avec une plaque de fond qui est destinée à asseoir le moufle (12).

14. Four selon l'une quelconque des revendications précédentes, **caractérisé en ce que** le moteur d'entraînement pour le piston (14) est raccordé à un dispositif de commande qui reçoit un signal d'entrée provenant du capteur de pression (26) et qui commande le moteur d'entraînement en modifiant la pression détectée par le capteur de pression (26).

15. Four selon l'une quelconque des revendications précédentes, **caractérisé en ce que** le moteur d'entraînement pour le piston (14) est raccordé à un dispositif de commande qui reçoit un signal d'entrée provenant du capteur de pression (26) et qui commande le moteur d'entraînement en modifiant la vitesse de compression.

16. Four selon l'une quelconque des revendications précédentes, **caractérisé en ce qu'**un dispositif de commande pour un dispositif d'entraînement (20) pour le piston (14) tient compte de l'élasticité du piston (14) pour la mise à disposition de la force de pression à l'extrémité active du piston (14).

17. Four selon l'une quelconque des revendications précédentes, **caractérisé en ce que** sur le piston (14) est disposé, en plus du capteur de pression, un capteur de trajet (76) dont le principe de fonctionnement repose, en particulier en cas d'utilisation d'un moteur pas à pas (22) pour le dispositif d'entraînement du piston (14), sur la saisie par le calcul des signaux de poussée d'avancement pour le moteur pas à pas (22).

18. Four selon l'une quelconque des revendications précédentes, **caractérisé en ce qu'**un côté de l'élément déformable (28) repose sur le piston (14) ou sur le dispositif d'entraînement (20) pour le piston (14) ou est formé par une partie du piston (14).

19. Four selon l'une quelconque des revendications précédentes, **caractérisé en ce que** le capteur de pression (26) est formé sur une branche d'un L qui forme l'élément déformable (28), le dispositif d'entraînement (20) s'appuyant sur la pointe de la branche.

20. Four selon l'une quelconque des revendications précédentes, **caractérisé en ce que**, pour le logement du capteur de pression (26), un poteau de soutien (88), sur lequel est fixé l'élément déformable (28), est disposé en appui solidaire avec le four.

21. Four selon l'une quelconque des revendications précédentes, **caractérisé en ce que** l'élément déformable (28) est configuré comme barre de flexion et comprend sur une surface une jauge de contrainte (86).

22. Four selon la revendication 21, **caractérisé en ce que** la barre de flexion comprend un évidement (90) qui s'étend en particulier sur environ la moitié de la longueur de la barre de flexion et sur environ deux tiers de la largeur de la barre de flexion.

23. Four selon l'une quelconque des revendications précédentes, **caractérisé en ce que** l'élément déformable (28) est métallique et se compose en particulier d'aluminium ou d'un alliage d'aluminium.
